# EUROPÄISCHE PATENTANMELDUNG

(11) **EP 2 738 385 A2**
(43) Veröffentlichungstag der Anmeldung: **04.06.2014**
(21) Anmeldenummer: 13004355.7
(22) Anmeldetag: 05.09.2013
(51) Int. Cl.: F03G 7/10

(54) **Selbstdrehender Stromgenerator**

(30) Priorität: 04.10.2012 DE 202012009509 U
(71) Anmelder: Khorram, Mostafa, 42105 Wuppertal (DE)
(72) Erfinder: Khorram, Mostafa, 42105 Wuppertal (DE)

(57) **Zusammenfassung**

Durch Verlagerung von Masse entsteht Energie (Kraft), so dass diese Kraft mithilfe eines besonderen Designs auf den Schaft eines eingebauten Generators übertragen wird. Diese Apparatur produziert durch den oben genannten Prozess Energie, ohne dass von außen weitere Energie zugeführt werden muss.

## Beschreibung

Bei der Erfindung handelt es sich um eine Apparatur auf dem Gebiet der Energieerzeugung.

Zur Zeit ist die Produktion von Strom abhängig von entweder dem Verbrennen fossiler Stoffe, Spaltung von Atomen einerseits oder von der Nutzung von Wind, Sonne, Wasser, Wasserdampf, chemische Reaktionen oder Erdwärme andererseits. Außerdem muss diese Energie in der Regel in ein zentrales Stromnetz eingespeist werden, so dass die Energie für die Nutzung dezentral zur Verfügung steht. Des Weiteren muss anderer technologischer Aufwand (z.B. die Umwandlung von Gleichstrom In Wechselstrom) betrieben werden. Diese Erfindung löst diese Probleme. Es wird kein CO₂ produziert, Strom kann am Ort des Bedarfs erzeugt werden, die Umwelt wird nicht belastet und es wird keine Wärme in die Atmosphäre abgegeben.

Der Strom wird durch das folgende Verfahren erzeugt: Durch Verlagerung von Masse entsteht Energie (Kraft), so dass diese Kraft mithilfe eines besonderen Designs auf den Schaft eines eingebauten Generators übertragen wird. Diese Apparatur produziert durch den oben genannten Prozess Energie, ohne dass von außen weitere Energie zugeführt werden muss. Der Schutzanspruch bezieht sich auf das spezielle Design, durch das Kraft auf einen Schaft verlagert wird.

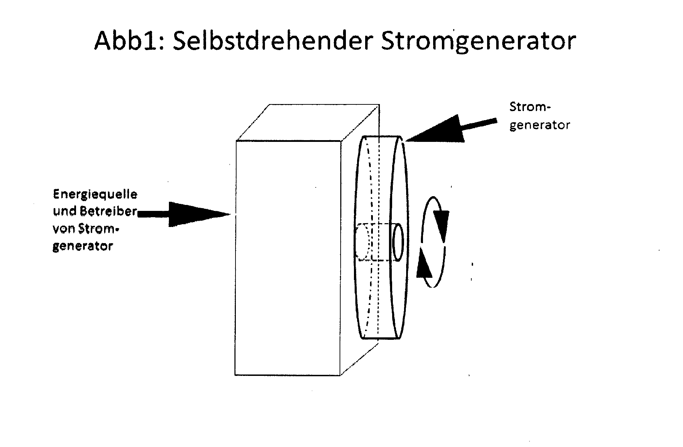

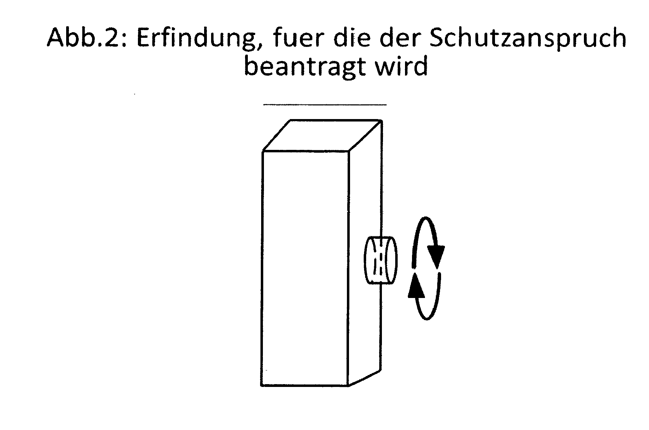

## Patentansprüche

1. Die Erfindung treibt andere Geräte oder andere anzutreibende Mechanismen durch die Übertragung eines Drehmoments an.

2. Sie ist unabhängig von
(2.1) anderen Energiequellen, wie z.B. fossilen Energien,
(2.2) anderen Kraftquellen, wie z.B. Wasser- oder Windkraft,
(2.3) Sonnenenergie,
(2.4) chemischen Reaktionen,
(2.5) Nuklearreaktionen und
(2.6) Erdwärme (geothermale Energie).
Die Erfindung ist somit unabhängig von dem Vorhandensein oder der Verfügbarkeit eines zentralen Stromnetzes und kann daher dezentral eingesetzt werden.

3. Der Mechanismus, für den der Patentanspruch beantragt wird, ist größenvariabel, d.h. er kann in verschiedenen Längen, Breiten und Höhen konstruiert werden, und somit den jeweiligen Bedürfnissen angepasst werden.

4. Das Gerät kann auch so konstruiert werden, dass es tragbar ist.
